**Europäisches Patentamt**

**European Patent Office**

**Office européen des brevets**

(19)

(11) Veröffentlichungsnummer : **0 391 945 B1**

# (12) EUROPÄISCHE PATENTSCHRIFT

(45) Veröffentlichungstag der Patentschrift :
**17.06.92 Patentblatt 92/25**

(51) Int. Cl.⁵ : **B23Q 17/22, B23Q 7/04**

(21) Anmeldenummer : **89900165.5**

(22) Anmeldetag : **14.12.88**

(86) Internationale Anmeldenummer :
**PCT/AT88/00110**

(87) Internationale Veröffentlichungsnummer :
**WO 89/05709 29.06.89 Gazette 89/14**

(54) **FERTIGUNGSEINRICHTUNG.**

(30) Priorität : **15.12.87 AT 3295/87**
**13.10.88 AT 2534/88**

(43) Veröffentlichungstag der Anmeldung :
**17.10.90 Patentblatt 90/42**

(45) Bekanntmachung des Hinweises auf die
Patenterteilung :
**17.06.92 Patentblatt 92/25**

(84) Benannte Vertragsstaaten :
**AT BE CH DE FR GB IT LI NL SE**

(56) Entgegenhaltungen :
**EP-A- 0 115 353**
**EP-A- 0 164 063**
**DE-A- 2 507 890**
**DE-U- 8 415 374**
**FR-A- 2 501 551**

(56) Entgegenhaltungen :
**US-A- 3 610 299**
**US-A- 3 718 061**
**US-A- 4 681 210**
**Werkstatt und Betrieb, Band 120, Nr. 3, März
1987, Carl Hanser-Verlag, (München), K. Renz
: "Rationalisierung der Fertigungdurch
CNC-gesteuertes Säagen2, Seiten 235-238**

(73) Patentinhaber : **Rumpler, Karl, Ing.**
**Kasernstrasse 23**
**A-8010 Graz (AT)**

(72) Erfinder : **Rumpler, Karl, Ing.**
**Kasernstrasse 23**
**A-8010 Graz (AT)**

(74) Vertreter : **Brauneiss, Leo et al**
**Patentanwälte Dipl.-Ing. Leo Brauneiss,
Dipl.-Ing. Dr. Helmut Wildhack Landstrasser
Hauptstrasse 50 Postfach 281
A-1031 Wien (AT)**

## Beschreibung

Die Erfindung betrifft eine Einrichtung zur Bearbeitung von langgestreckten Werkstücken, welche Einrichtung eine vorzugsweise als Stützrollengang ausgebildete Bewegungsbahn und eine längs der Bewegungsbahn verfahrbare Transporteinrichtung aufweist, welche Transporteinrichtung die Werkstücke längs der Bewegungsbahn zu zumindest einer Bearbeitungsstation, z.B. Sägestation, Bohrstation, bewegt und deren Bewegungen von einem Positions- bzw. Drehgeber und einen Rechner gesteuert sind, wobei die Transporteinrichtung, gegebenenfalls gemeinsam mit dem Positionsgeber auf einem Laufwagen angeordnet ist, der auf einer parallel und oberhalb der Bewegungsbahn des Werkstückes durch die Einrichtung verlaufenden Schiene verfahrbar ist, wobei an der Bewegungsbahn zumindest eine ortsfeste Spanneinrichtung für die Halterung des Werkstückes vorgesehen ist und die Transporteinrichtung eine das Werkstück mit Backen ergreifende Klemmeinrichtung umfaßt und wobei mit der Spanneinrichtung und der Transporteinrichtung das Werkstück von gegenüberliegenden Seiten her einspannbar ist.

Derartige Einrichtungen sind z.B. aus der EP-A- 115 353 bekannt.

Im wesentlichen werden mit derartigen Einrichtungen langgestreckte Profile in automatisierter Abfolge bearbeitet, wobei das Werkstück von einer Transportspanneinrichtung mitgenommen und während der Weiterbewegung bearbeitet wird, wozu entlang der Bewegungsstrecke ein oder mehrere Werkzeuge angebracht sind, welche nach Anfahren ihrer vorgegebenen Positionen zum Einsatz kommen. Schwierigkeiten ergeben sich jedoch bei dieser Einrichtung, wenn runde oder flache Werkstücke bearbeitet werden sollen, da für lange derartige Werktücke ein rascher und exakter Transport durch die Einrichtung nicht erfolgen kann, weil ein Nachgreifen mit den Backen nicht bzw. nur über ungenügend lange Wegstrecken erfolgen kann.

Ziel der Erfindung ist die Erstellung einer exakt arbeitenden, einfach aufgebauten, leicht bedienbaren und rasch arbeitenden Einrichtung zur Bearbeitung von Werkstücken, die unterschiedliche Gestalt aufweisen können.

Dieses Ziel wird bei einer Einrichtung der eingangs genannten Art dadurch erreicht, daß die Backen der Transporteinrichtung, deren Klemmbereich sich mit dem Klemmbereich der Backen der Spanneinrichtung(en) höhenmäßig überdeckt, in geschlossener Stellung bzw. mit eingespanntem Werkstück durch die geöffneten Backen der feststehenden Spanneinrichtung durchbewegbar sind und die Backen der Transporteinrichtung weiter spannbar sind als die geschlossenen bzw. das Werkstück haltenden Backen der ortsfesten Spanneinrichtung(en), sodaß die geschlossenen oder ein Werkstück klemmenden Backen der Transporteinrichtung und der Spanneinrichtung durch die geöffneten Backen der jeweils anderen Einrichtung hindurchbewegbar sind.

Die Backen der ortsfesten Spanneirichtungen stehen den Backen der Transporteinrichtung nicht im Weg bzw. beschränken nicht deren Bewegungsbereich. Das Werkstück kann somit vom Materiallager bis zur Ablage geklemmt gehalten werden. Dies ist z.B. bei der aus der EP-A 115 353 bekannten Einrichtung unmöglich, da die Backen der Transporteinrichtung die Backen der ortsfesten Spanneinrichtung (und auch nicht umgekehrt) nicht durchfahren können, was aber bei der Bearbeitung eines runden oder flachen Werkstückes unbedingt erforderlich wäre, wenn man ein andauerndes Klemmen bzw. die Möglichkeit verwirklichen will, ein Werkstück aus dem der Einrichtung vorgeordneten Materiallager oder vom Beginn der Bewegungsbahn an bis zur Ablage nach der Bearbeitung exakt zu führen und festgeklemmt zu halten. Durch die andauernde Klemmung des Werkstückes wird eine exakte Positionierung ermöglicht, sodaß nur eine Lageberechnung zum Arbeitsbeginn erfolgen muß; daraufhin verläuft die Fertigung automatisch. Die spezielle Art der Halterung des Werkstückes ermöglicht auch die Bearbeitung von langen runden oder flachen Werkstücken, die durch die Einrichtung mit den Backen bewegt werden, die einander nicht höhermäßig unter Zeit- und Genauigkeitsverlust ausweichen müssen, um eine andauernde Klemmung zu erreichen, sondern nur längs der Bewegungsbahn mit im wesentlichen gleicher Höhe des Klemmbereiches verfahrbar sind. Aufgrund der Tatsache, daß die Backen nur Translationsbewegungen ausführen, können ihre Steuerung und ihre Antriebe einfacher aufgebaut sein, wodurch die Genauigkeit erhöht wird. Die Transporteinrichtung bewegt das Werkstück zu den einzelnen Bearbeitungsstationen, wo sie dieses in genau festgelegter Position einbringt; die dort vorgesehenen ortsfesten Spanneinrichtungen halten das Werkstück in dieser festgelegten Position fest, worauf die Bearbeitung erfolgt. Wenn die Bearbeitung abgeschlossen ist, wird das Werkstück in eine definierte Ablagestellung gebracht und danach werden die Backen der Transporteinrichtung geöffnet und das Werkstück auf eine Transporteinrichtung, Förderband od.dgl abgelegt und abtransportiert.

Die Einrichtung kann auch als neine Zuschnitteinrichtung verwendet werden, welche aufgrund ihrer speziellen Einrichtung die Möglichkeit hat, das Material bzw. Werkstück in genauer Länge gerade oder mit einem Schrägschnitt abzuschneiden.

Bei einer vorteilhaften Ausführungsform ist vorgesehen, daß die Werkstücke in einem(r) der Bewegungsbahn vorgeordneten Magazin oder Materialablage (vorzugsweise fluchtend zur Bewegungsbahn) gelagert bzw. angeliefert sind und daß die Backen mit der Transporteinrichtung aus der Einrichtung heraus bis über ein im Magazin bzw. in der Materialablage befindliches Werkstück verfahrbar sind.

Bei einer besonderen Ausbildungsform können am Magazin mehrere Abteilungen für verschiedene Querschittsgrößen und Formen angebracht werden, und bei einer quer verfahrbaren Ausbildung des Magazins können entsprechend vorgewählte Kammern angefahren werden, um so den gewünschten Stab herauszuwählen. Es ist somit die Möglichkeit gegeben, im Zusammenwirken mit einem Prozessor, Computer od.dgl. die gewünschte Position mit dem vorgesehenen Material anzufahren, ein Material aus der Magazinkammer abzuziehen und vollständig automatisch genau ein Werkstück zu fertigen, das demzufolge auch automatisch an einer vorgesehenen Stelle verwendungsfertig übernommen werden kann.

Mit der erfindungsgemäßen Einrichtung können vorwiegend Stangenmaterialien beschnitten und bearbeitet werden. Es werden in den Rechner bzw. Computer Daten wie Längen, Stückzahl, Schnittart (gerader Schnitt, schräger Schnitt u.dgl.) oder Daten betreffend die weitere Bearbeitung mit Ablage, Lagerhaltung und Verrechnung eingegeben. Die zu bearbeitenden Materialien werden an der Ablage so abgelegt, daß wahlweise eine Beschneidung mit oder ohne Kopfschnitt erfolgt und durch eine Markierung die Lage des Kopfschnittes angezeigt wird. Nach erfolgter Ablage wird die Einrichtung in automatischer Abfolge in Betrieb gesetzt, wobei eine Transportspanneinrichtung das abgelegte Material erfaßt und durch eine gegengleiche bzw. gegenüberliegende, stationär angebrachte Spanneinrichtung durchbewegt. Nach Erreichung einer Kontrollstelle bzw. Schnittstelle wird die stationäre Spanneinrichtung geschlossen, sodaß das Material ebenfalls von dieser gehalten wird. Nach eingegebener Schnittstellung wird eine Säge in der Art in Stellung gebracht, in der Schalter entsprechend der Schnittstellung vorgesehen sind, welche bis auf den einen anzufahrenden elektrisch verriegelt sind. Beim Passieren dieses Kontaktschalters, der nicht verriegelt ist, stoppt die Anfahrtbewegung und eine Indexiereinrichtung wird geschaltet, die wiederum die Säge in der gewünschten Stellung festhält. Nach erfolgtem Kopfschnitt ist eine Position auf die Schnittkante bezogen festgelegt, und es ergibt die Bewegung abzüglich der jeweiligen Schwenkart bzw. Schwenkgröße der Säge die abzuschneidende bzw. zu bearbeitende Länge als auch die Stellung zur Weiterbearbeitung und Ablage mit Reststückrückgabe, sodaß eine Messung oder Anbringung eines Längenanschlages nicht notwendig ist. Zur Weiterbearbeitung können beliebige Werkzeuge eingesetzt werden, welche sich an den Vorgaben des Zuschnittes und somit festgelegten Positionen orientieren, wobei die Daten zur Werkzeugbewegung mit den Zuschnittdaten eingegeben werden und somit bei einer gleichbleibenden - oder schrittweisen - Weiterbewegung des Werkstückes entsprechend die Werkzeuge eingesetzt werden.

Die Ausbildung und Anordnung der Transportspanneinrichtung und die stationär angebrachten Spanneinrichtungen ergeben eine Überfahrbarkeit und sdomit kann das Werkstück bei offener Stellung der Spanneinrichtungen durch diese durchbewegt und bei gewünschter Arbeitsstellung das Werkstück gehalten werden. Eine zusätliche Schwenkspannung unterstützt vor allem die Transportspannung beim Beschneiden und Bearbeiten, wobei durch eine besondere Ausbildung eine Werkstückauflage in Spannstellung das Werkstück in der richtigen Lage hält und beim Öffnen es so freigibt, daß bei einer Wiederbewegung dieses nicht schleift.

Eine Voraussetzung für eine gleichbleibende Bezugslage des Materials ist eine konstruktive Ausbildung der Spanneinrichtung, wobei die Spannbackenpaare so arbeiten, daß ein Spannbacken im gespannten Zustand immer die gleiche Haltung einnimmt und der zweite Spannbacken entsprechend der Materialstärke im Spannbereich zu stehen kommt.

Eine Ausbaustufe der Einrichtung ermöglicht eine automatisierte Zuführung der Materialien, wobei ein Magazin vorgesehen ist, in welchem Materialien mit gleichen Profilformen und Stärken übereinander als auch nebeneinander gelagert sind und weiters verschiedene Profile und Stärken einzeln oder in Stapeln nebeneinander abrufbar gelagert sind. Die Magazinablage ist vorzugsweise nach den entsprechenden Profilen mit Kammern bzw. Abteilen so beschaffen, daß eine gewünschte Kammer mit Inhalt im Computer registriert und abrufbar angefahren werden kann. Eine Hubeinrichtung, welche im Fertigungsbereich vorwiegend ortsfest angebracht ist, hebt die darüberliegenden Materialien so weit, bis sie im Arbeitsbereich zu stehen kommen, wobei darauffolgend das zuoberstliegende von der Transportspanneinrichtung erfaßt und abgezogen werden kann. Bei einem Stapel von über-und nebeneinanderliegenden Materialien wird dieses an einen Anschlag gedrückt und das einzelne Material oder die übereinanderliegenden Materialien angehoben und nach und nach verarbeitet, wobei des nächste Material bzw. die nächste Stapellage nachgeschoben wird.

Die zu verarbeitenden Materialien können in ebenfalls vom Computer registrierte Aufnahmekammern gelegt werden, wobei beispielsweise auftragsgemäß die Werkstücke zusammengehörig weitergereicht werden. Mit der Eingabe der herzustellenden Werkstücke können Daten für die Lagerhaltung und Kostenabrechnung vom Computer errechnet und ausgedruckt werden. Um eine rationelle Fertigung zu erreichen, ist eine Zusatzeinrichtung vorgesehen, wobei Materialien aus dem Magazin genommen werden und in Bereitstellung abgelegt werden, sodaß während der Fertigung eine Besorgung und Entsorgung der Materialien möglich ist, wobei eine Aufnahmevorrichtung einen Stab aus dem Magazin anhebt und einen Schwenkrollgang einschwenkt und darauf das Material aufgelegt wird und in Arbeitsstellung geschwenkt bzw. nach der Verarbeitung das Reststück in Abhebe- bzw. Absenkstellung gebracht wird.

In einer weiteren Ausbildung der Einrichtung ist das Magazin ortsfest stationiert bzw. die Materialien in vorgewählten Positionen gelagert und die Fertigungseinrichtung wird auf das jeweils gewünschte Material hinbewegt.

Die verfahrbare Transportspanneinrichtung wirkt mit den ortsfesten Spanneinrichtungen in der Weise zusammen, daß diese von der gegenüberliegenden Materialseite eingreifen und so ein abwechselnd oder gleichzeitiges Erfassen bei veränderbaren Arbeitsstellungen auch eine übersetzende bzw. überfahrende Arbeitsweise möglich macht. Dadurch ist die Transportspanneinrichtung als Zuführeinrichtung und infolge bei einem gleichbleibenden materialerfassenden Spannzustand in der Arbeitsstellung von einer Abstützeinrichtung zusätlich gehalten, eine Bearbeitungs- bzw. Fertigungseinrichtung und somit kann am Material bzw. Werkstück eine bearbeitete Stelle, beispielsweise eine Schnittkante, festgelegt werden und im Zusammenwirken mit einem Rechner die darauffolgende Position exakt angefahren bzw. bearbeitet und danach genau abgeschnitten werden, wodurch eine Werkstückvermessung oder Anschlageinstellung überflüssig wird. Das mittlerweile aus dem Material gefertigte Werkstück ist unverändert von der Transportspanneinrichtung gehalten und durch den Arbeitsablauf über die von Computer erfaßten Daten ist eine genaue Lage festgelegt, sodaß die Tranportspanneinrichtung als Übergabeeinrichtung das Werkstück in genauer Position übergeben kann. Diese Ausbildung ermöglicht eine anzubauende Materialablage und eine damit zusammenwirkende automatisierte Materialerfassung bzw. Übernahme von verschiedenen Profilquerschnitten in abwechselnder Reihenfolge bei vorbeibewegter oder anzufahrender horizontaler als auch vertikaler Materialzubringung. Vorzugsweise wird eine unterteilte Abalge von Stangenmaterial in der Art belegt, daß gleiche Profile übereinander in eine vorbestimmte Ablagekammer kommen, sodaß die nebeneinanderliegenden Kammern jeweils andere Profile übereinanderliegend aufnehmen, welche entsprechend zur Entnahme angefahren werden können. Um die Lage zu bestimmten, wird vorzugsweise eine Seite der Ablagekammer festgelegt, sodaß bei Veränderung der Profilgröße und somit der Kammergröße die zugeordnete Materialseite immer die gleiche Position einnimmt. Diese Aufgabe entspricht einer Ausbildung der Transportspanneinrichtung als auch der ortsfesten Spanneinrichtung, wobei die Spannbackenpaare beim Öffnen sich vom Material wegbewegen, beim Spannen jedoch ein Spannbacken die gleiche Position einnimmt, welche der festgelegten Materialseite entspricht und der zweite Spannbacken entsprechend der Materialstärke im Spannbereich zu stehen kommt.

Durch die flexible Fertigung mit Computererfassung ist eine programmgesteuerte Fertigung möglich, da mehrere Abläufe zusammengefaßt werden können, wobei nach einer materialbeschaffenden Ausbaustufe aus verschiedenen Materialien bzw. Profilen eine Produktion nach Bedarf möglich ist und somit ein Zwischenlager entfallen kann. Weiters ist durch die konstruktive Ausbildung und Computer-kontrollierten Position bzw. Lageerfassung eine Vernetzung und exakte Weitergabe der Werkstücke an nachgeordnete Fertigungseinrichtungen möglich.

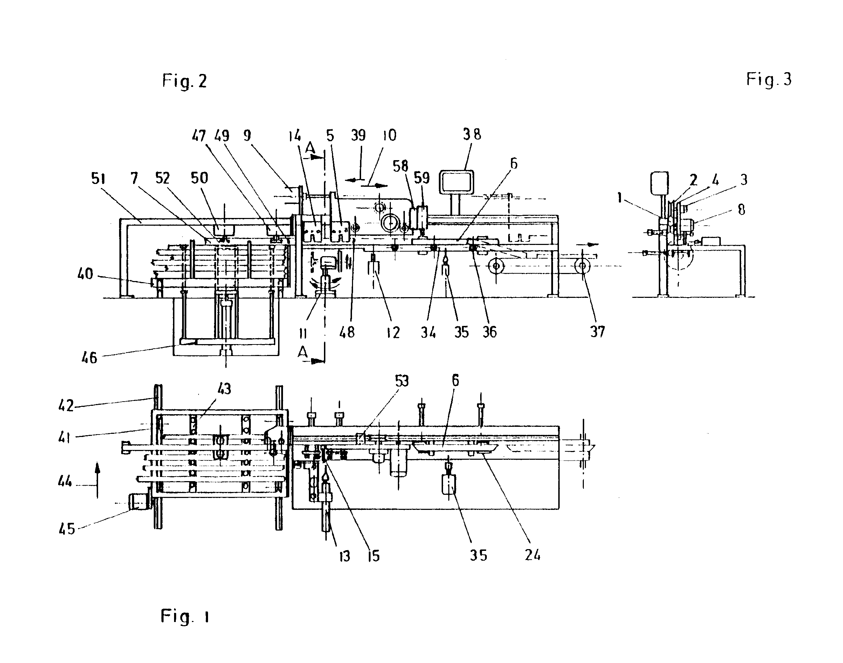

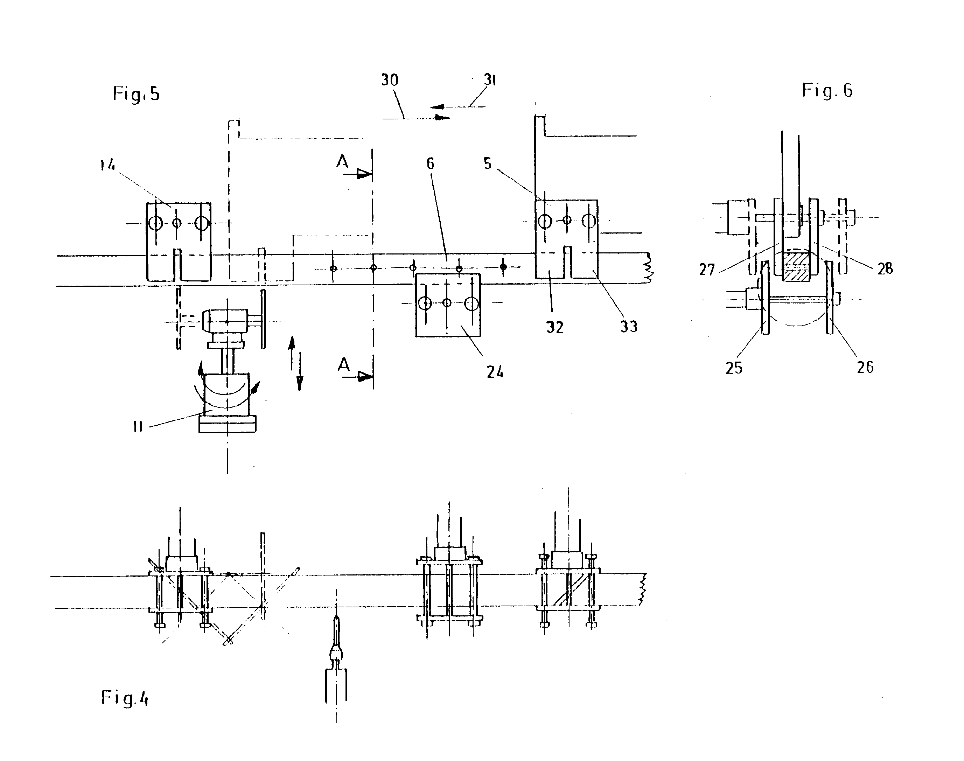

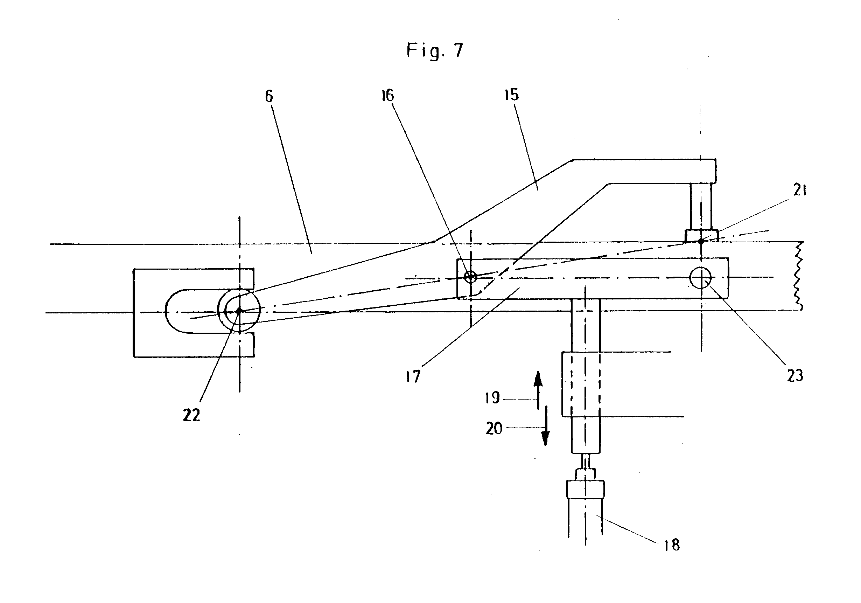

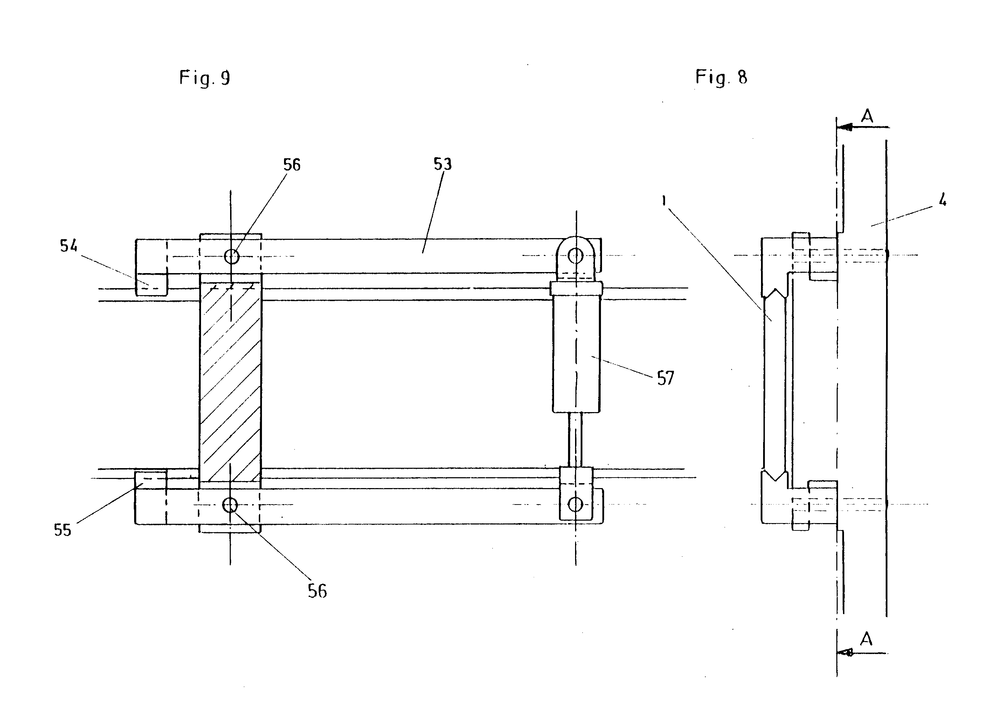

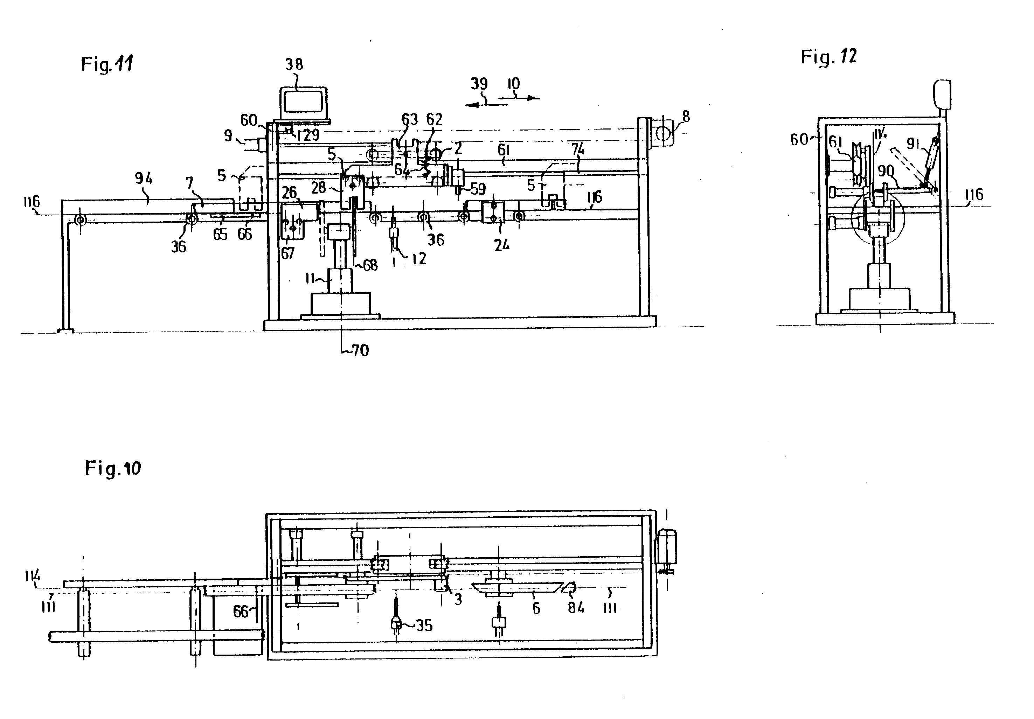

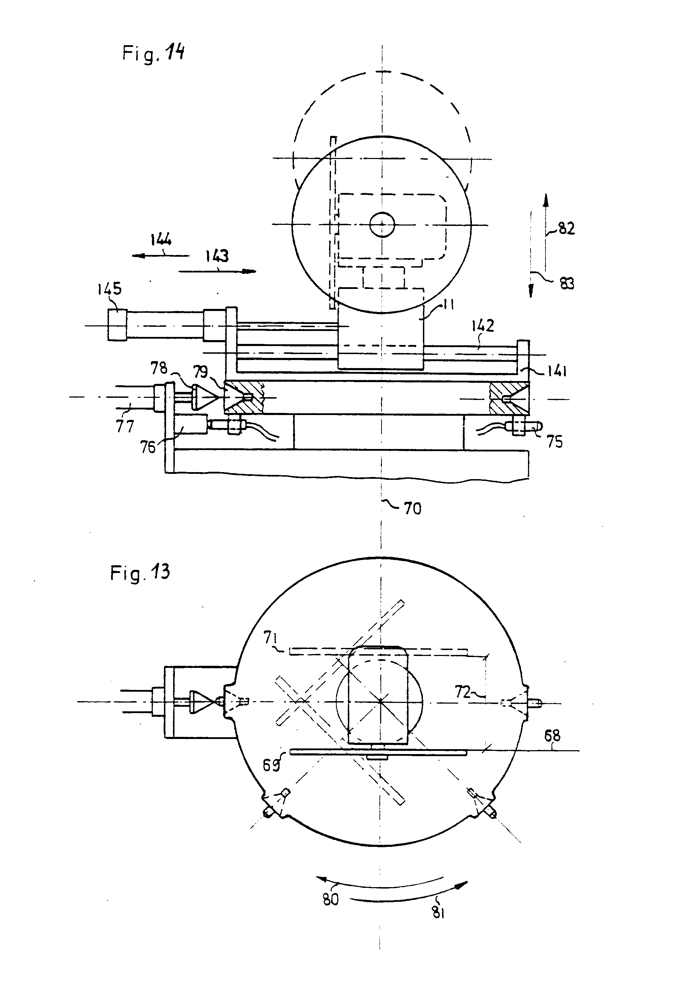

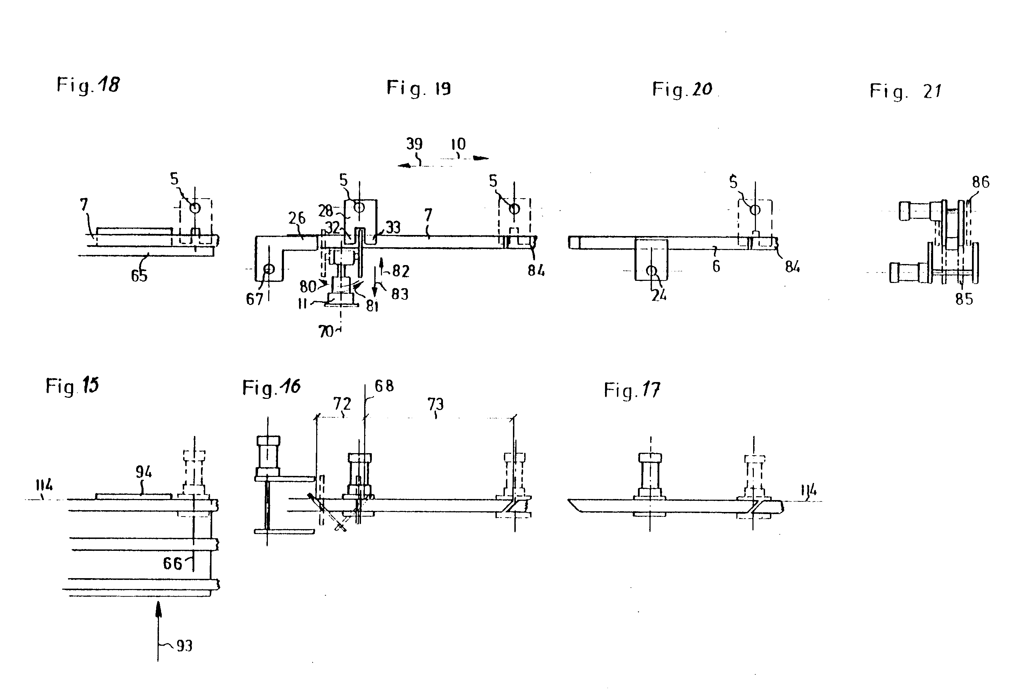

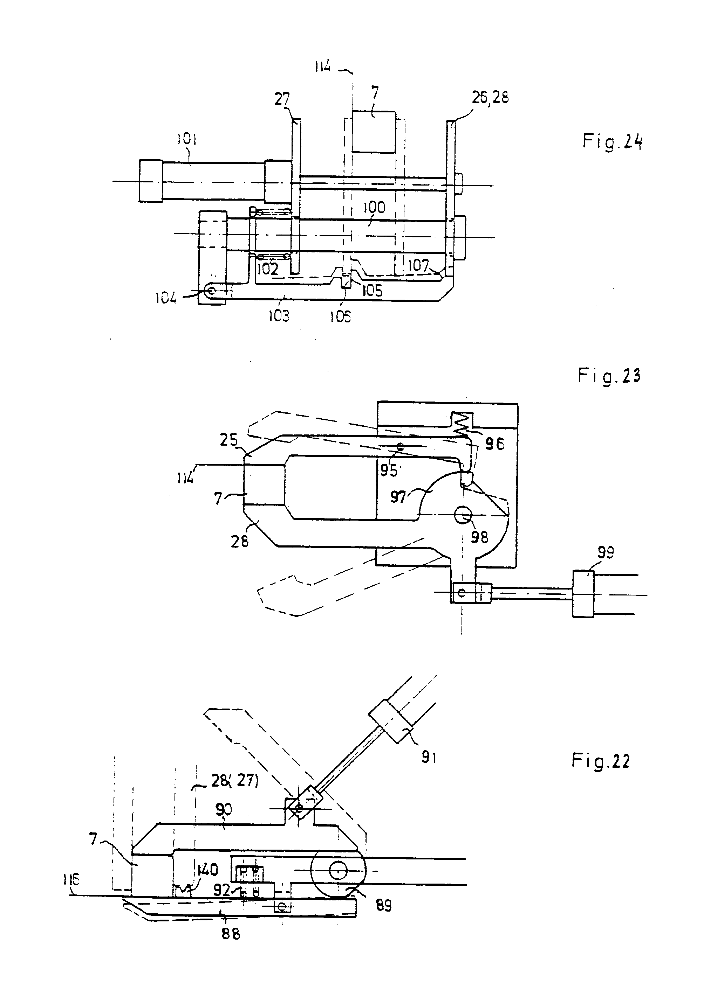

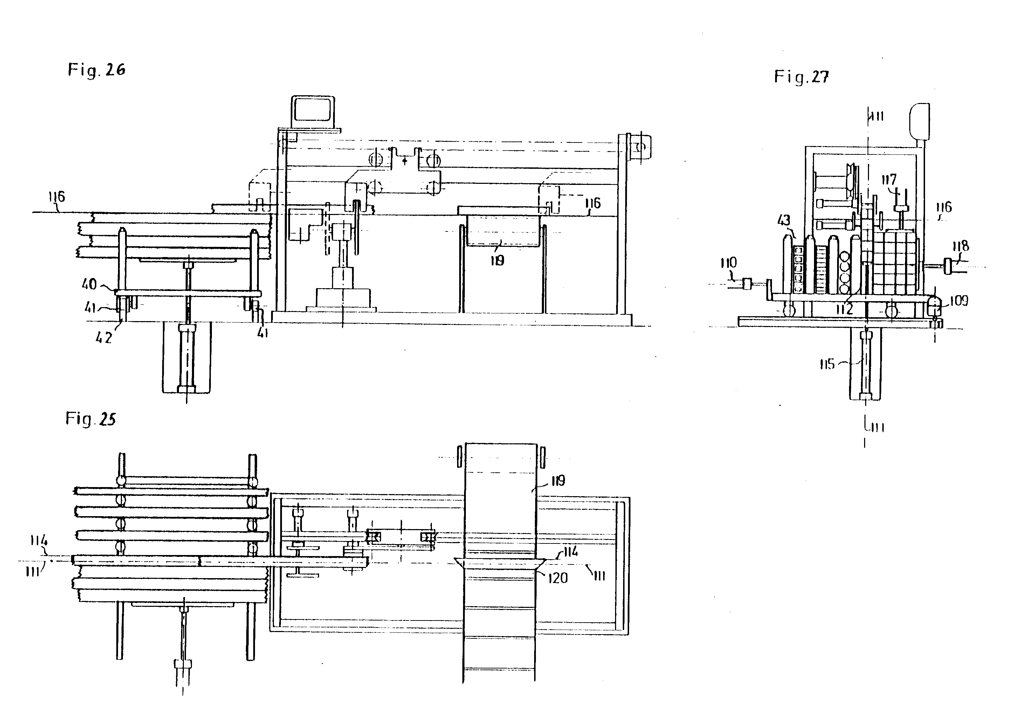

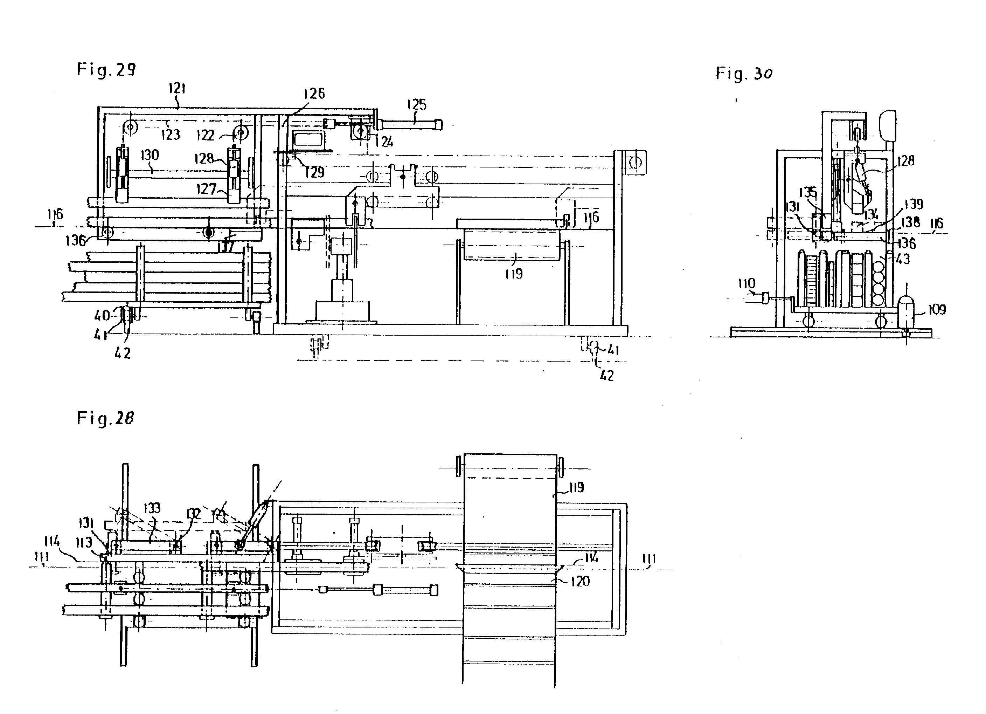

Anhand der Zeichnung werden Ausführungsformen der Erfindung beispielsweise näher erläutert. Fig.1 zeigt eine erfindungsgemäße Ausführungsform im Grundriß, Fig.2 im Aufriß, Fig.3 zeigt einen Schnitt A-A in Fig.2, Fig.4 zeigt eine Spanneinrichtung im Grundriß, Fig.5 zeigt die Spanneinrichtung im Aufriß, Fig.6 zeigt einen Schnitt A-A in Fig.5, Fig.7 zeigt die Spann-Schwenkeinrichtung, Fig.8 zeigt eine Blockierbremse in Vorderansicht, Fig.9 zeigt einen Schnitt A-A in Fig.8, Fig.10 zeigt eine weitere Ausführungsform der Erfindung im Grundriß, Fig.11 im Aufriß, Fig.12 in Seitenansicht, Fig.13 zeigt eine Sägeschwenkeinrichtung im Grundriß, Fig.14 in Seitenansicht. Fig.15 zeigt eine Materialablage im Grundriß, Fig.16 zeigt eine Spannstellung, wobei eine stationär angebrachte Spanneinrichtung geöffnet und die Transportspanneinrichtung geschlossen am Beginn der Fertigungsposition steht und eine beispielsweise zu bewegende Strecke angegeben ist und die Säge beim Schwenken eine von der Eingabelänge abzuziehende Länge ergibt. Fig.14 zeigt eine Spanneinrichtung zur weiteren Bearbeitung im Grundriß, Fig.18 zeigt die Materialablage im Aufriß, Fig.19 zeigt eine Spannstellung im Aufriß, Fig.20 zeigt eine Spanneinrichtung zur Weiterverarbeitung im Aufriß. Fig. 21 zeigt eine Spannstellung mit geschlossener Transportspanneinrichtung und geöffneter stationär angebrachter Spanneinrichtung in Seitenansicht. Fig.22 zeigt eine Schwenkspanneinrichtung mit absenkbarer Auflage, Fig.23 zeigt eine Spanneinrichtung, wobei ein Spannbacken geschlossen immer die gleiche Stellung einnimmt und der zweite entsprechend der Werkstückstärke im Spannbereich zu stehen kommt. Fig.24 zeigt ein Ausführungsbeispiel, wobei die Spannbacken parallel bewegt und von dem Spannbackenpaar ein Spannbacken geschlossen immer die gleiche Stellung einnimmt und der zweite Spannbacken entsprechend der Materialstärke im Spannbereich zu stehen kommt. Fig.25 zeigt eine Einrichtung mit Magazin- bzw. Stapellagerung im Grundriß, Fig.26 im Aufriß, Fig.27 in Seitenansicht. Fig.28 zeigt eine Einrichtung mit Magazinentnahme und Bereitstellungseinrichtung im Grundriß, Fig.29 im Aufriß, Fig.30 in Seitenansicht.

Die Fig.1 bis 3 zeigen eine Schiene 1, auf der eine Rolle 2 abrollt, die mit einem Drehgeber 3 drehschlüssig verbunden ist und einen Schlitten 4 mit einer darauf angebrachten Transportspanneinrichtung 5, welche ein Werkstück 6 bzw. Vormaterial 7 erfaßt und von einem Motor 8 oder Betriebsmittelzylinder 9 in Pfeilrichtung 10 bewegt wird. Eine schwenkbare und mit einer Hubeinrichtung versehene Säge 11 beschneidet das Werkstück vor oder nach dem Weiterbewegen. Die Weiterbewegung kann kontinuierlich oder schrittweise erfolgen, wobei ein Werkzeug 12 und/oder ein Werkzeug 13 das Werkstück 6 bearbeitet. Zwischen bzw. nach der schrittweisen Weiterbewegung erfaßt eine im wesentlichen ortsfeste Spanneinrichtung 14 das Vormaterial 7 bzw. Werkstück 6. Des weiteren hält eine Spann-Schwenkeinrichtung 15, welche über eine Achse 16 schwenkbar gelagert ist, das Werkstück 6 fest.

Eine bevorzugte Ausbildung ermöglicht gleichzeitig eine Positionierung des Werkzeuges 13, wobei beispielsweise auch bei ungleichen Werkstückstärken die Bearbeitungsstelle in gewünschter Stellung zur Mitte festgelegt wird. Es ist eine Brücke 17 vorgesehen (Fig.7), in der die Achse 16 gelagert ist und die ebenfalls das Werkzeug 13 trägt, welches über einen Betriebsmittelzylinder 18 in Pfeilrichtung 19 bis 20 hin und her bewegt wird. Ein vorbestimmtes Abstandsverhältnis zwischen der Achse 16, dem Auflagepunkt 21 und dem Drehpunkt 22 ergibt eine gleiche, beispielsweise Mittelstellung, der Bearbeitungsachse 23. Beim Aufliegen des Aufliegepunktes 21 auf dem Werkstück 6 ist dieses gespannt und die Bearbeitungsachse 23 in gewünschter Arbeitsstellung.

Ein weiteres merkmal der Erfindung zeigt eine Anordnung, bei der eine oder mehrere Spanneinrichtungen 24 mit der Transportspanneinrichtung 5 in der Weise zusammenwirkt, daß ein Übergreifen und somit ein schrittweises Nachsetzen in der Form möglich ist, sodaß diese wechselweise geschlossen bzw. geöffnet sind (Fig.5). Sind die Spannbacken 25-27 geöffnet, so können die Spannbacken 27-28 der Transporteinrichtung 5 im geschlossenen Zustand mit dem Werkstück in Richtung des Pfeiles 30 durchfahren bzw. durchbewegt werden (Fig.6). Bei geöffneter Stellung der Transportspanneinrichtung 5 kann diese in Pfeilrichtung 31 bewegt werden, ohne daß diese am Werkstück 6 streift.

Als weiteres Konstruktionsmerkmal sind die Spannbacken 27-29 geschlitzt bzw. getrennt ausgebildet, sodaß zwischen den Spannbackenteilen 32-33 die Säge 11 das Werkstück trennen kann und so beim Weiterbewegen das abgetrennte Restück und das zu bearbeitende Werkstück mitbewegt werden.

Eine weitere Bearbeitungsstation 34 ist im Bewegungsbereich so angeordnet, daß das Werkstück 6 in genauer, vorberechneter Lage abgegeben wird, worauf weitere Werkzeuge 35 das Werkstück 6 bearbeiten und darauffolgend über angetriebene Rollen 36 dieses an eine Fördereinrichtung 37 weiterbewegt wird. Ein angeschlossener Rechner 38, welcher den Bewegungsablauf vorgegeben hat, zeigt im Zusammenwirken mit dem Drehgeber 3 und der Rolle 2 direkt die genaue Position entlang der Schiene 1 bzw. dem Schlitten 4 ohne Fehlerquelle durch die spezielle Ausbildung der Antriebselemente an und legt sie auch fest.

Nach abgeschlossener Fertigung wird der Schlitten 4 in Pfeilrichtung 39 auf Grund- bzw. Anfangstellung gebracht, oder vorher das Reststück des Vormaterials 7 in die Ablagestelle gebracht.

Eine erweiterte Ausführungsform zeigt angebaut ein Magazin 40, welches Aufnahmekammern 43 besitzt, in welchen die Vormaterialien 7 entsprechend ihrer Dimensionen eingelegt werden können, wobei eine besondere Ausbildung des Magazins über Rollen 41 auf einer Schiene 42 in Pfeilrichtung 44 hin- und zurückbewegt werden kann, um ein entsprechend vorgesehenes Material auszuwählen. Bei der Bewegung, welche von Hand ausgeführt werden kann, ist es ebenfalls möglich, diese durch einen Antrieb 45 im Zusammenwirken mit dem Rechner 38 zu erreichen und die gewünschte Stellung und das somit richtige Vormaterial 7 festzulegen. Darauffolgend werden die übereinandergelegten Vormaterialen 7 von einer Hubeinrichtung 46 so weit angehoben, daß der zuoberstliegende Stab in richtiger Fertigungsposition zu liegen kommt. Darauffolgend wird der Stab von der Transportspanneinrichtung 5 oder der Vorschubeinrichtung 47, welche als Rollentrieb oder aberauch nachgreifend ausgebildet werden kann, in Bearbeitungsstellung gebracht. Nach erfolgter Bewegung in die Fertigungsstrecke passiert das Vormaterial 7 einen Sensor 48, welcher die Anlage zur Fertigung in Betrieb setzt. Nach abgeschlossener Fertigung wird das Vormaterial 7 wieder zurück in das Magazin 40 bewegt, wobei ein Sensor 49 die abzulegende Lage festlegt. Darauffolgend wird von der Hubeinrichtung 46 das übereinanderliegende Vormaterial bzw. Halbfabrikat so weit gesenkt, daß die Hubeinrichtung frei wird.

Eine weitere Ausbildung, welche bei schweren Vormaterialien 7 Verwendung findet, sieht einen Stützrollengang 50 vor, der ein oder mehrmals entlang der Bewegungslinie auf einer Brücke 51 gelagert ist und über Rollen 52 das Vormaterial 7 ergreift und beim Nachziehen eine reibungsarme Bewegung möglich macht.

Eine bevorzugte Ausbildung ermöglicht eine genaue und schwingungsfreie Bearbeitung ohne Abweichung vom Referenzpunkt durch eine Blockierbremse 53 (Fig.9), welche Bremsbacken 54,55 besitzt, die sich einerseits an der Schiene 1 oder an einer parallel geführten Schiene, Leiste od.dgl. festklemmen und sich anderseits gelenkig über eine Achse 56 am Schlitten 4 abstützen. Ein Bremsmagnet oder Betriebsmittel-zylinder 57 leitet die Bremsung ein.

Ein weiteres Konstruktionsmerkmal zeigt einen Werkzeugträger 58, welcher am Schlitten 4 aufgebaut, ein Werkzeug 59 tragend sich entlang der Schiene 1 mitbewegt und beispielsweise das von der Spanneinrichtung 24 gehaltene Werkstück 6 bearbeitet. Mit 38 ist ein Computer bezeichnet und mit 60 ein Rahmen, auf dem sich eine Laufbahn 61 abstützt, auf der wiederum über Rollen 2 und eine Wippe 62 ein Laufwagen 63 von einem Motor 8 oder Betriebsmittelzylinder 9 bewegt wird, wobei eine Rolle 2 mit angebautem Drehgeber 3 drehschlüssig verbunden beim Abrollen mitdreht, welcher bei gleichbleibendem Auflagedruck über eine Feder 64 gehalten und so ohne Schlupf mitgedreht wird und während der Bewegung Impulse an den Computer 38 weitergibt.

Ebenfalls mitbewegt wird eine Transportspanneinrichtung 5, welche das Material 7 in der Ablage 65 mitnimmt, in der eine Markierung 66 so angebracht ist, daß der erste Schnitt (Kopfschnitt) festgelegt werden kann. Nach Inbetriebsetzung wird das Material 7 von der Transportspanneinrichtung 5 über Rollen 36, sowie durch die geöffnete Spanneinrichtung 67, bis zu einer Schnitt- bzw. Arbeitsbeginnstellung 68 durchbewegt und darauffolgend die Spannung eingeleitet. Eine Säge 11 schneidet das Material 7 in einer Stellung 69 ab und schwenkt darauffolgend über eine Schwenkachse 70 in die Stellung 71, sodaß eine Schnittgröße 72 entsteht, welche von einer eingegebenen gewünschten Fertigungslänge vom Computer 38 abgezogen wird und somit eine Bewegungslänge 73 entsteht. Es ist ein Messen oder eine Anschlaganbringung oder ein laufendes Versetzen eines Anschlages nicht notwendig, sondern vielmehr wird das Werkstück durch den drehschlüssig angebrachten Drehgeber 3 oder eine angebrachte Längenmeßeinrichtung 74 zwangsläufig genau vermessen und vom Computer 38 überwacht. Für die jeweiligen Schnittstellungen sind dazugehörige Schalter 75 vorgesehen, welche bis auf den zu der gewünschten Stellung gehörigen elektrisch verriegelt sind, sodaß beim Vorbeibewegen an einer Schaltnocke 76 der nicht verriegelte Schalter die Schwenkbewegung ausschaltet und zugleich eine Indexiereinrichtung 77 einschaltet, wobei danach ein Indexierbolzen 78 in eine Indexierbohrung 79 eingefahren wird und somit eine genaue Position erreicht und die Säge festgehalten wird. Es können ebenfalls die Schalter 75 ortsfest angebracht und die Nocken beim Schwenken mitbewegt werden. Die Schwenkung erfolgt abwechselnd in Pfeilrichtung 80 sowie Pfeilrichtung 81. Die Schnittbewegung ist mit Pfeil 82 und die Rückstellung mit Pfeil 83 dargestellt. Die stationär angebrachte Spanneinrichtung 67 ist so gelagert, daß diese unterhalb des Materials 7 und die Transportspanneinrichtung 5 oberhalb bzw. je nach Ausführung umgekehrt oder gegenüber liegt, sodaß die Spannbacken 26 mit den Spannbacken 28 gegengleich das Material 7 erfassen. Die Spannbacken 28 sind geteilt, sodaß eine Spannbackenhälfte 32 nach dem Kopfschnitt das Material 7 festhält und die zweite Spannbackenhälfte 33 den Abschnitt 34 trägt.

Ein Merkmal der Erfindung ist eine Auslegung des Spannhubes. So ist die stationär angebrachte Spanneinrichtung 67 im geöffneten Zustand soweit geöffnet, daß die Transportspanneinrichtung 5 mit den gegengleichen Spannbacken in geöffneter sowie mit eingespanntem bzw. umgreifendem Material 7 durchbewegt werden kann und anderseits bei geschlossener bzw. materialumgreifender Stellung 85 in geöffneter Stellung 86 der Transportspanneinrichtung 5 überfahren werden kann. Bei der schrittweisen oder andauernden Weiterbewegung kann das Material 7 von einem Werkzeug 12,35 bearbeitet werden, wobei ebenfalls wie beim Beschneiden das Material 7 oder das daraus gefertigte Werkstück 6 im Ruhezustand von einer Schwenkspanneinrichtung festgehalten wird, wobei eine Auflage 88 mit einem Exzenter 89 und einem Spannarm 90 über einen Betriebsmittelzylinder 91 und eine Feder 92 so zusammenwirken, daß das Material in geöffneten Zustand frei ist, hingegen geschlossen die gleiche Auflagehöhe hat.

Eine genaue Arbeitsstellung wird durch eine bevorzugte Konstruktionsausbildung erreicht, welche einerseits eine Zubringung bzw. Anlehnung in Richtung des Pfeiles 93 an einen Anschlag 94 ergibt und bei der Bearbeitung immer von der gleichen Material- bzw. Werkstückskante ausgegangen werden kann. Dies erfordert, daß ein Spannbacken 25,27 in geschlossenem Zustand immer die gleiche Stellung entsprechend der durch den Anschlag 94 festgelegten Material bzw. Werkstückkante aufweist und der zweite Spannbacken 26,28 entsprechend der Materialstärke im Spannbereich zu stehen kommt, welche Spannarbeit über einen Lagerbolzen 95 durch eine Feder 96 einerseits und einen Exzenter 97, einen Lagerbolzen 98 sowie Betriebsmittelzylinder 99 anderseits bewirkt wird.

Ein weiteres Ausführungsbeispiel zeigt eine konstruktive Ausbildung mit parallel bewegten Spannbacken 27,28, welche auf einer Führung 100 verschiebbar gelagert sind und von einem Betriebsmittelzylinder 101 bewegt werden, wobei eine Feder 102 einerseits einen Riegel 103 über Achsbolzen 104 an die Spannbacken drückt und anderseits der Spannbacken 27 auf einer Anschlagfläche 105 auffährt und darauffolgend in eine Ausnehmung 106 einrastet. Beim Öffnen wird der Spannbacken 28 auf eine schräge Fläche 107 gedrückt, wodurch der Riegel 103 so weit verschoben wird, daß der Spannbacken 27 frei wird.

Bei einem weiteren Ausführungsbeispiel wird das Werkstück 6 von einer ortsfesten Spanneinrichtung 24 gehalten und mit dem Werkzeug 59 während der Arbeitsbewegung 39 (Pfeil 10) bearbeitet.

In einer Ausbaustufe ist ein Magazin 40 vorgesehen, welches über Rollen 41 sich auf der Schiene 42 abstützt und vom Motor 109 oder Betriebsmittelzylinder 110 so bewegt wird, daß daran angebrachte Aufnahmekammern 43 entsprechend der vorgewählten darin befindlichen übereinanderliegenden Materialien in Arbeitsstellung 111 gebracht werden, welche Aufnahmekammern 43 nebeneinander verschiedene Materialprofile aufnehmen und so entsprechend der Profilstärke die Aufnahmekammer 43 angepaßt ist, wobei eine Aufnahmekammerseite 112 immer unverändert bleibt, welche in der Entnahmestellung der Arbeitsstellung 111 entspricht und die gleiche Stellung wie den Anschlag 113 sowie die Bezugskante 114 einnimmt. Eine Hubeinrichtung 115 hebt die übereinanderliegenden Materialien so weit an, bis das Zuoberstliegende auf Auflagehöhe 116 gebracht ist. Bei gleichen Profilen können diese von einem Stapel über eine Hubeinrichtung 115, Kettenförderer od.dgl. schichtenweise bei gleichzeitigem Niederhalten des Reststapels entgegen einem Niederhalter 117 angehoben werden und somit jeweils das zuoberstliegende Material verarbeitet werden. Darauffolgend wird der Reststapel von der Hubeinrichtung 118 nachgeschoben, welche Stapelverarbeitung auch auf einer ortsfesten Unterlage erfolgen kann. Eine auftragsbezogene Auflage bzw. Weitergabe ist durch eine Fördereinrichtung 119 gegeben, welche Kammern 120 besitzt, die ebenfalls über Computer 38 angefahren werden können, wobei nach Einbringung der gefertigten Werkstücke 6 diese entsprechend weitergereicht werden.

Eine weitere Ausbaustufe der Erfindung zeigt die Einrichtung mit einem Tragarm 121, auf welchen ein oder mehrere Kettenräder 122 oder Rollen gelagert sind, über die eine Kette 123, ein Seil od.dgl. gelegt ist und mit einem Getriebmotor 124 oder einem Betriebsmittelzylinder 125 so betätigt werden, daß dies eine Hebeeinrichtung 126 ergibt, wobei je nach Materiallänge beliebig viele Spanneinrichtungen 127 angebracht werden können, welche Spannbetätigung von einem Betriebsmittelzylinder 128 durchgeführt wird, der mit einem Proportional-Druckbegrenzungsventil 129 zusammenwirkt und ebenfalls mit der stationär angebrachten Spanneinrichtung 14,24 als auch mit der Transportspanneinrichtung 5 zusammengeschalten ist, sodaß bei verschiedenen Materialien die jeweils notwendige Spannkraft vom Computer 38 aus den eingegebenen Profildaten festgelegt bzw. abgestimmt werden kann. Eine Zentrierführung 130, welche mit den Spanneinrichtungen 127 in Verbindung steht, hält diese bei der Auf- und Abbewegung in richtiger Stellung, sodaß nach Anfahren einer Aufnahmekammer 43 ein Material 7 erfaßt und somit angehoben wird, daß eine schwenkbar gelagerte Aufnahmebrücke 131 über Gelenkbolzen 132 und Schwenkbarm 133 tragend so einschwenkt, daß das Material 7 an einer Ablagestellung 134 abgelegt werden kann und beim Ausschwenken der Aufnahmebrücke 131 dieses Material in die Arbeitsstellung 111 mitgenommen wird, wobei bei einer Weiterschwenkung das Material 7 vom Anschlag 135 zurückgehalten wird, hingegen die Aufnahmebrücke 131 mit den angebrachten Rollen 136 und der Ablage 137 weiterbewegt wird, bis der Anschlag 138 annähernd auf das Material 7 auftrifft. Eine besondere dem Material angepaßte gefederte Materialzentrierung 139 sorgt für die richtige Lage, z.B. daß ein Rundmaterial am Abrollen gehindert wird.

Ein weitere Ausbildung der Auflage 88 ist eine Abstützeinrichtung 140, wobei sich der Spannbacken 28 vor allem beim Kopfschnitt und Bearbeitung abstützt. Um den Schnittbereich bei flachen Profilen zu erweitern, ist eine Hubeinrichtung 141 vorgesehen, die über die Führung 142, Support od.dgl. die Säge 11 beweglich in Pfeilrichtung 143 sowie 144 verschiebbar aufnimmt und von einem Betriebsmittelzylinder 145 bewegt wird.

Wie der vorangehenden Beschreibung und den Patentansprüchen zu entnehmen, stellt auch die beschriebene Vorgangsweise ein erfinderischen Verfahren dar.

Erfindungswesentlich ist vor allem, daß die Vermessung des Werkstückes gleichzeitig mit dem Vorschub des Werkstückes nach Anbringung des Kopfstückes (Zuschneiden) erfolgt. Ferner ist es erfindungswesentlich, daß das Material mit der Kante bzw. Fläche an einem Backen angelegt wird, der von der Spanneinrichtung in eine bestimmte Position gebracht wurde, wobei dieser Backen feststeht und der zweite Backen beweglich ist und mit ihm das Werkstück eingespannt wird. Ferner sind die gegenüberliegenden stationären Spannungseinrichtungen erfindungswesentlich, womit ein Backen über die Mitte fahren bzw. der andere Backen durchfahren kann.

Erfindungsgemäß wird ein Material (vorwiegend in Stabform) von einer über die Einrichtung hinausreichenden Transportspanneinrichtung erfaßt und in Kopfschnittstellung (erster Bezugsschnitt) gebracht, wo ein bereits im Computer eingegebener, gerader oder Schrägschnitt erfolgt, wobei die Schnittkante als Ausgangspunkt für die folgenden Maßgrößen bzw. Schritte der Transportspanneinrichtung bei gleichzeitiger Bearbeitung und nachfolgender Ablängig dient. Durch die über die Einrichtung hinausgreifende Transportspanneinrichtung können vorbeibewegte Materialien mit abwechselnden Profilgröße und Formen erfaßt bzw. nicht verbrauchte Materialien abgelegt werden. Ebenfalls ist somit eine Ausbaustufe möglich, in der ein Magazin Materialien mit gleichen Profilen übereinander und solche Stapellagen mit verschiedenen Profilen nebeneinander aufnimmt, anzuschließen.

## Patentansprüche

1. Einrichtung zur Bearbeitung von langgestreckten Werkstücken (7), welche Einrichtung eine vorzugsweise als Stützrollengang ausgebildete Bewegungsbahn und eine längs der Bewegungsbahn verfahrbare Transporteinrichtung (5) aufweist, welche Transporteinrichtung (5) die Werkstücke (7) längs der Bewegungsbahn zu zumindest einer Bearbeitungsstation (11,34), z.B. Sägestation, Bohrstation, bewegt und deren Bewegungen von einem Positions- bzw. Drehgeber (3) und einem Rechner (38) gesteuert sind, wobei die Transporteinrichtung (5), gegebenenfalls gemeinsam mit dem Positionsgeber (3) auf einem Laufwagen angeordnet ist, der auf einer parallel und oberhalb der Bewegungsbahn des Werkstückes (7) durch die Einrichtung verlaufenden Schiene (1) verfahrbar ist, wobei an der Bewegungsbahn zumindest eine ortsfeste Spanneinrichtung (14,67) für die Halterung des Werkstückes (7) vorgesehen ist und die Transporteinrichtung (5) eine das Werkstück (7) mit Backen (27,28) ergreifende Klemmeinrichtung umfaßt und wobei mit der Spanneinrichtung (14,67) und der Transporteinrichtung (5) das Werkstück (7) von gegenüberliegenden Seiten her einspannbar ist, dadurch gekennzeichnet, daß die Backen (27,28) der Transporteinrichtung (5), deren Klemmbereich sich mit dem Klemmbereich der Backen (25,26) der Spanneinrichtung(en) höhenmäßig überdeckt, in geschlossener Stellung bzw. mit eingespanntem Werkstück (7) durch die geöffneten Backen (25,26) der feststehenden Spanneinrichtung (14,67) durchbewegbar sind und die Backen (27,28) der Transporteinrichtung weiterspannbar sind als die geschlossenen bzw. das Werkstück (7) haltenden Backen (25,26) der ortsfesten Spanneinrichtung(en) (14,67), sodaß die geschlossenen oder ein Werkstück (7) klemmenden Backen der Transporteinrichtung und der Spanneinrichtung durch die geöffneten Backen der jeweils anderen Einrichtung hindurchbewegbar sind.

2. Einrichtung nach Anspruch 1, dadurch gekennzeichnet, daß die Werkstücke (7) in einem(r) der Bewegungsbahn vorgeordneten Magazin (40) oder Materialablage (65), vorzugsweise fluchtend zur Bewegungsbahn gelagert bzw. angeliefert sind und daß die Backen (27,28) mit der Transporteinrichtung (5) aus der Einrichtung heraus bis über ein im Magazin (40) bzw. in der Materialablage befindliches Werkstück (7) verfahrbar sind.

3. Einrichtung nach Anspruch 1 oder 2, dadurch gekennzeichnet, daß zu Beginn der Bewegungsbahn eine Sägestation (11) zur Anbringung eines Kopfschnittes vorgesehen ist, dessen Lage vom Rechner (38) als Bezugspunkt für die Wegmessung auf der Bewegungsbahn bzw. für die Bewegungen der Transporteinrichtung (5) herangezogen wird.

4. Einrichtung nach einem der Ansprüche 1 bis 3, dadurch gekennzeichnet, daß die Backen (27,28) der Transporteinrichtung (5) und der feststehenden Spanneinrichtung (14,67) zur Ermöglichung eines quer zur Bewegungsbahn erfolgenden Sägeschnitten in Spannbackenhälften (32,33) geteilt sind, die zwischen sich einen Schlitz für den Durchtritt des Sägebalttes der Sägestation (11) begrenzen (Fig.5).

5. Einrichtung nach einem der Ansprüche 1 bis 4, dadurch gekennzeichnet, daß auf dem Laufwagen bzw. Schlitten (4) ein Werkzeugträger (58) mit einem oder mehreren Werkzeugen (59) zur Bearbeitung des Werkstückes (7) mitgeführt ist (Fig.2).

6. Einrichtung nach einem der Ansprüche 1 bis 5, dadurch gekennzeichnet, daß der Positionsgeber (3) auf einer eigenen, zur Schiene (1) gleichlaufend angeordneten Schiene mitbewegt ist.

7. Einrichtung nach einem der Ansprüche 1 bis 6, dadurch gekennzeichnet, daß eine Blockierbremse (53) mit direkt auf die Schiene (1) oder auf eine parallel geführte Schiene einwirkenden Bremsbacken (54,55) vorgesehen ist, die über eine Achse (56) am Schlitten (4) abgestützt ist, wobei zur Bremsung die Bremsbacken (54,55) von einem Bremsmagneten oder einem Betriebsmittelzylinder (57) betätigbar sind (Fig.8,9).

8. Einrichtung nach einem der Ansprüche 1 bis 7, dadurch gekennzeichnet, daß die Werkstücke (7) übereinander im Magazin (40) gelagert sind, daß von der Transporteinrichtung (5) das oben liegende Werkstück (7) ergriffen und in die Einrichtung eingeführt wird und daß das Magazin (40) zumindest eine Aufnahmekammer (43) besitzt, in der die Werkstücke (7) übereinander gelagert sind und nach Entnahme des obersten Werkstückes (7) die darunterliegenden Werkstücke (7) von einer Hubeinrichtung (46) nachgerückt bzw. angehoben werden, wobei gegebenenfalls in nebeneinanderliegenden Aufnahmekammern (43) Werkstücke (7) mit unterschiedlichem Profil gelagert sind.

9. Einrichtung nach einem der Ansprüche 1 bis 8, dadurch gekennzeichnet, daß eine weitere Spanneinrichtung (24) für das Werkstück (7) vorgesehen ist, die eine auf eine vorgegebene Auflagenhöhe eingestellte Auflage (88), einen Exzenter (89), einen mit dem Exzenter (89) verbundenen Spannarm (90), einen am Spannarm (90) angreifenden Betriebsmittelzylinder (91) sowie eine, die Auflage (88) belastende Feder (92) umfaßt, wobei die Auflage (88) verschwenkbar gelagert und vom Exzenter (89) in die vorgegebene Höhenlage verstellbar ist und eine Aufnahme (140) für einen Fortsatz des Spannbackens (28) der Transporteinrichtung (5) aufweist (Fig. 22).

10. Einrichtung nach einem der Ansprüche 1 bis 9, dadurch gekennzeichnet, daß einer der Backen (27,28) der ortsfesten Spanneinrichtung (67) bzw. Transporteinrichtung (5) zur Ausbildung einer definierten seitlichen Ausgangslage bzw. eines definierten Seitenanschlages für das Werkstück (7) im geschlossenen Zustand immer dieselbe Stellung quer zur Bewegungsbahn einnimmt, wobei der zweite Spannbacken (25,27), der entsprechen der Materialstärke des Werkstückes (7) im Spannbereich zu stehen kommt, auf einem Lagerbolzen (95) gelagert ist, wobei sein Ende gegen die Wirkung einer Feder (95) von einem Exzenter (97) in Schließstellung verstellbar ist, der den ersten Backen (26,28) trägt, und von einem Betriebsmittelzylinder (99) verstellbar ist (Fig.23).

11. Einrichtung nach einem der Ansprüche 1 bis 10, dadurch gekennzeichnet, daß die parallel bewegten Spannbacken (25,26;27,28) der Spanneinrichtung (67) bzw. der Transporteinrichtung (5) auf einer Führung (100) verschiebbar gelagert sind und gegeneinander mit einem Betriebsmittelzylinder (101) verstellbar sind, wobei eine Feder (102) einen an einem Achsbolzen (104) gelagerten Riegel (103) an die Spannbacken drückt, wobei der Riegel (103) eine Anschlagfläche (105) und eine Ausnehmung (106) aufweist, wobei beim Schließen jeweils der eine der Spannbacken (25,27) auf eine Anschlagfläche (105) auffährt und in eine Ausnehmung (106) einrastet und wobei zum Öffnen der Backen eine schräge Auflauffläche (107) vorgesehen ist, die vom Backen (26,28) belastbar ist, wodurch der Riegel (103) verschwenkt und der andere Spannbacken (25,27) freigesetzt wird (Fig.24).

12. Einrichtung nach einem der Ansprüche 9 bis 11, dadurch gekennzeichnet, daß das Magazin (40) über Rollen (41) über Schienen (42) abgestützt ist und von einem Motor (45,109) oder einem Betriebsmittelzylinder (110) quer zur Bewegungsbahn verstellbar ist.

13. Einrichtung nach einem der Ansprüche 1 bis 12, dadurch gekennzeichnet, daß am Beginn der Bewegungsbahn zur Definition eines Bezugspunktes für die Wegmeßung ein Anschlag (113) bzw. eine Bezugskante (114) lageinvariant vorgesehen sind.

14. Einrichtung nach einem der Ansprüche 9 bis 13, dadurch gekennzeichnet, daß das Magazin (40) eine Hubeinrichtung (115), z.B. einen Kettenförderer umfaßt, mit der übereinanderliegende Werkstücke (7) bis auf Auflagehöhe (116) anhebbar sind, wobei bei einem Stapel von gleichen Profilen die übereinanderliegenden Werkstücke (7) schichtweise anhebbar sind und gleichzeitig der Reststapel von einem Niederhalter (117) zurückgehalten ist, wobei nach Abarbeitung der übereinanderliegenden Werkstücke die Hubeinrichtung in Ausgangsstellung zurückfahrbar ist und der Reststapel von einer Hubeinrichtung (118) um annähernd eine Profilstärke nachschiebbar ist.

15. Einrichtung nach einem der Ansprüche 1 bis 14, dadurch gekennzeichnet, daß die Sägestation (11) ein quer oder in einem Winkel, vorzugsweise 45°, zur Bearbeitungsbahn verfahrbares Sägeblatt (69) aufweist, das in Abstand von einer Schwenkachse (70) vom Antriebsmotor getragen und zur Durchführung von zwei im Abstand verlaufenden Schnitten um die Schwenkachse (70) um 180° verschwenkbar ist (Fig.13,14).

16. Einrichtung nach einem der Ansprüche 1 bis 15, dadurch gekennzeichnet, daß das Magazin (40) und die Einrichtung mit Antriebseinrichtungen zur Ausrichtung eines im Magazin enthaltenen Werkstückes (7) mit der Bewegungsbahn relativ zueinander bewegbar bzw. verstellbar sind.

17. Verfahren zur Bearbeitung von langgestreckten Werkstücken mit einer Vorrichtung nach einem der Ansprüche 1 bis 16, dadurch gekennzeichnet, daß nach Ergreifen des Werkstückes, vorzugsweise aus einem der Einrichtung vorgeordneten Materiallager ein Kopfschnitt, vorzugsweise im rechten Winkel oder im Winkel von 45° zur Bewegungsbahn, angebracht wird, der als definierte Anfangslage für die Wegmessung bzw. den Weitertransport durch die Einrichtung herangezogen wird, daß das Werkstück während der gesamten Bewegungs- und Bearbeitungsdauer von den backen der Transporteinrichtung und/oder der Spanneinrichtung(en) eingeklemmt gehalten wird, wobei die das Werkstück klemmenden backen der Transporteinrichtung beim Transport des Werkstückes durch die geöffneten Backen der ortsfesten Spanneinrichtung(en) durchgefahren werden bzw. die ein Werkstück klemmenden backen der Spanneinrichtung(en) zwischen den geöffneten backen der Transporteinrichtung liegend von diesen überfahren werden, und daß das Werkstück rechnergesteuert in einer vorbestimmten Ablageposition zur Weitergabe abgesetzt wird.

**Claims**

1. Device for processing elongate work pieces (7), which device has a path of motion which is preferably formed as a supporting roller course and has a transporting device (5) which can be moved along the path of motion, which transporting device (5) moves the work pieces (7) along the path of motion to at least one processing station (11, 34), for example sawing station, drilling station, and the movements of which are controlled by a position transducer or rotary transducer (3) and a computer (38), with the transporting device (5), if applicable, together with the position transducer (3) being arranged on a travelling carriage which can be moved on a rail (1) which extends parallel to and above the path of motion of the work piece (7) through the device, with at least one fixed chucking device (14, 67) being provided on the path of motion for the support of the work piece (7) and with the transporting device (5) comprising a clamping device which grips the work piece (7) with jaws (27, 28), and with it being possible to chuck the work piece from opposing sides with the chucking device (14, 67) and the transporting device (5), characterised in that the jaws (27, 28) of the transporting device (5), the clamping range of which in terms of height overlaps the clamping range of the jaws (25, 26) of the chucking device(s), in the closed position or with chucked work piece (7) are capable of being moved through the opened jaws (25, 26) of the fixed chucking device (14, 67) and the jaws (27, 28) of the transporting device are capable of being stretched further than the jaws (25, 26), which are closed or hold the work piece (7), of the fixed chucking device(s) (14, 67) so that the closed jaws, or jaws clamping a work piece (7), of the transporting device and

9

of the chucking device can be moved through the opened jaws of the other respective device.

2. Device according to claim 1, characterised in that the work pieces (7) are stored or delivered in a magazine or material deposit (65) arranged in front of the path of motion, preferably in alignment with the path of motion, and in that the jaws (27, 28) can be moved with the transporting device (5) out of the device as far as a position above a work piece (7) which is located in the magazine (40) or in the material deposit.

3. Device according to claim 1 or 2, characterised in that provided at the start of the path of motion there is a sawing station (11) for the purpose of providing a head cut, the position of which is used by the computer (38) as a reference point for the measurement of travel on the path of motion or for the movements of the transporting device (5).

4. Device according to one of the claims 1 to 3, characterised in that the jaws (27, 28) of the transporting device (5) and of the fixed chucking device (14, 67), for the purpose of rendering possible sawing which occurs crosswise in respect of the path of motion, are divided into chucking jaw halves (32, 33) which between them delimit a slot for the passage of the saw blade of the sawing station (11) (Figure 5).

5. Device according to one of the claims 1 to 4, characterised in that a tool carrier (58) with one or several tools (59) for the purpose of processing the work piece (7) is carried along as well on the travelling carriage or slide (4) (Figure 2).

6. Device according to one of the claims 1 to 5, characterised in that the position transducer (3) is moved along as well on a particular rail which is arranged so that it runs in the same direction as the rail (1).

7. Device according to one of the claims 1 to 6, characterised in that a blocking brake (53) is provided, having brake shoes (54, 55) which act directly on the rail (1) or on a rail which is guided parallel thereto, supported by way of an axle (56) on the slide (4), with the brake shoes (54, 55) being operable by a braking magnet or by an operating means cylinder (57) for the purpose of braking (Figures 8, 9).

8. Device according to one of the claims 1 to 7, characterised in that the work pieces (7) are stored one upon the other in the magazine (40), in that the work piece (7) lying at the top is gripped by the transporting device (5) and is inserted into the device and in that the magazine (40) has at least one receiving chamber (43) in which the work pieces (7) are stored one upon the other and after removal of the uppermost work piece (7) the work pieces (7) which lie underneath are moved up or lifted by a lifting device (46), in which case, if applicable, work pieces (7) with differing profiles are stored in receiving chambers (43) which lie side by side.

9. Device according to one of the claims 1 to 8, characterised in that a further chucking device (24) is provided for the work piece (7), which device comprises a support (88) which is adjusted to a given support height, a cam (89), a chucking arm (90) which is connected with the cam (89), an operating means cylinder (91) which acts on the chucking arm (90) and also a spring (92) which loads the support (88), with the support (88) being swivel-mounted and being capable of being adjusted by the cam (89) into the given position in height and having a receiver (140) for an extension of the chucking jaw (28) of the transporting device (5) (Figure 22).

10. Device according to one of the claims 1 to 9, characterised in that one of the jaws (27, 28) of the fixed chucking device (67) or transporting device (5), for the purpose of forming a defined lateral starting position or a defined lateral stop for the work piece (7), in the closed state always occupies the same position crosswise to the path of motion, with the second chucking jaw (25, 27), which, according to the material thickness of the work piece (7), comes to stand in the chucking region, being mounted on a bearing pin (95), in which case its end can be adjusted into the closed position in opposition to the action of a spring (95) (sic) by a cam (97), which bears the first jaw (26, 28), and can be adjusted by an operating means cylinder (99) (Figure 23).

11. Device according to one of the claims 1 to 10, characterised in that the chucking jaws (25, 26; 27, 28) of the chucking device (67) or the transporting device (5) respectively, which jaws are moved in parallel, are mounted in a displaceable manner on a guide (100) and can be adjusted relative to each other with an operating means cylinder (101), with a spring (102) pressing a locking bar (103), which is mounted on an axle pin (104), onto the chucking jaws, with the locking bar (103) having a stop surface (105) and a recess (106), in which case in the event of closure, in each case, one of the chucking jaws (25, 27) runs onto a stop surface (105) and engages into a recess (106) and provided for the purpose of opening the jaws there is an oblique run-on surface (107) which can be loaded by the jaws (26, 28), whereby the locking bar (103) is swung and the other chucking jaw (25, 27) is released (Figure 24).

12. Device according to one of the claims 9 to 11, characterised in that the magazine (40) is supported by way of rollers (41) over rails (42) and can be adjusted by a motor (45, 109) or an operating means cylinder (110) crosswise to the path of motion.

13. Device according to one of the claims 1 to 12, characterised in that a stop (113) and a reference edge (114) are provided with invariant position at the start of the path of motion for the purpose of defining a reference point for the measurement of travel.

14. Device according to one of the claims 9 to 13, characterised in that the magazine (40) comprises a lifting device (115), for example a chain conveyor, with which work pieces (7), which lie one upon the other, can be lifted to support height (116), in which case with a stack of identical profiles the work pieces (7) which lie one upon the other can be lifted layer-wise and at the same time the remaining stack can be held back by a holding-down device (117), in which case after working off the work pieces which lie one upon the other the lifting device can be moved back to the starting position and the remaining stack can be pushed on by a pushing device (118) by approximately one profile thickness.

15. Device according to one of the claims 1 to 14, characterised in that the sawing station (11) has a saw blade (69) which can be moved crosswise or at an angle, preferably 45°, to the processing path and which is carried at a distance from a swivel axis (70) by the drive motor and can be swung about the swivel axis (70) by 180° for the purpose of effecting two cuts which extend with interspacing (Figures 13, 14).

16. Device according to one of the claims 1 to 15, characterised in that the magazine (40) and the device with driving devices can be moved or adjusted relative to each other for the purpose of aligning a work piece (7) contained in the magazine with the path of motion.

17. Method for processing elongate work pieces with an arrangement according to one of the claims 1 to 16, characterised in that after gripping the work piece, preferably from a material store which is arranged in front of the device, a head cut is provided, preferably at a right angle or at an angle of 45° to the path of motion, which cut is used as a defined starting position for the measurement of travel or the further transportation through the device, in that the work piece is held throughout the period of movement and processing, clamped by the jaws of the transporting device and/or the chucking device(s), in which case the jaws of the transporting device, clamping the work piece, in the case of transportation of the work piece, are moved through the opened jaws of the fixed chucking device(s), or the jaws of the chucking device(s) clamping a work piece, lying between the opened jaws of the transporting device, are passed over by the latter and in that the work piece is set down in a computer-controlled manner in a predetermined position of deposit for the purpose of being passed on.


## Revendications

1. Dispositif d'usinage de pièces longues (7), ce dispositif présentant une voie de déplacement configurée de préférence sous forme de transporteur à rouleaux d'appui et un dispositif de transport (5) mobile sur la voie de déplacement, ce dispositif de transport (5) transportant les pièces (7) sur la voie de déplacement à destination d'au moins une station d'usinage (11, 34), par exemple une station de sciage, une station de perçage, et dont les déplacements sont commandés par un capteur de position linéaire et de rotation (3) et un ordinateur (38), le dispositif de transport (5) étant disposé sur un chariot le cas échéant en commun avec le capteur de position linéaire (3), ce chariot étant mobile sur un rail (1) traversant le dispositif en parallèle et au-dessus de la voie de déplacement de la pièce (7), au moins un dispositif de serrage fixe (14, 67) pour le maintien de la pièce (7) étant prévu sur la voie de déplacement, et le dispositif de transport (5) comprenant un dispositif de serrage saisissant la pièce (7) avec des mâchoires (27, 28), et la pièce (7) pouvant être fixée par ses côtés opposés par le dispositif de serrage (14, 67) et le dispositif de transport (5), le dispositif d'usinage étant caractérisé en ce que les mâchoires (27, 28) du dispositif de transport (5), dont la capacité de serrage correspond en hauteur à la capacité de serrage des mâchoires (25, 26) du (ou des) dispositif(s) de serrage, peuvent se déplacer, en position fermée ou avec la pièce (7) fixée, à travers les mâchoires ouvertes (25, 26) du dispositif de serrage fixe (14, 67), et en ce que les mâchoires (27, 28) du dispositif de transport peuvent être serrées à une plus grande ouverture que les mâchoires (25, 26) du (ou des) dispositif(s) de serrage fixe(s) (14, 67) fermées ou maintenant la pièce (7), de sorte que les mâchoires du dispositif de transport et du dispositif de serrage fermées ou serrant une pièce (7) peuvent se déplacer à travers les mâchoires ouvertes de chaque autre dispositif.

2. Dispositif suivant revendication 1, caractérisé en ce que les pièces (7) sont logées ou déposées dans un magasin (40) ou sur une table de dépose (65) disposés en amont de la voie de déplacement, de préférence au niveau de la voie de déplacement, et en ce que les mâchoires (27, 28) sont mobiles avec le dispositif de transport (5) pour sortir du dispositif jusqu'à un magasin (40) ou une pièce (7) se trouvant sur la table de dépose.

3. Dispositif suivant revendication 1 ou 2, caractérisé en ce que, au début de la voie de déplacement, une station de sciage (11) est prévue pour l'exécution d'une coupe en bout, dont la position est utilisée par l'ordinateur (38) comme point de référence pour la mesure du déplacement sur la voie de déplacement ou pour les déplacements du dispositif de transport (5).

4. Dispositif suivant l'une des revendications 1 à 3, caractérisé en ce que les mâchoires ( 27, 28 ) du dispositif de transport (5) et du dispositif de serrage fixe (14, 67) sont divisées en demi-mâchoires de serrage (32, 33) pour permettre une opération de sciage s'effectuant perpendiculairement à la voie de déplacement, ces demi-mâchoires de serrage délimitant entre elles (fig. 5) une fente pour le passage de la lame de scie de la station de sciage (11).

EP 0 391 945 B1

5. Dispositif suivant l'une des revendications 1 à 4, caractérisé en ce qu'un porte-outil (58), avec un ou plusieurs outils (59), est entraîné (fig. 2) sur le chariot (4) pour l'usinage de la pièce (7).

6. Dispositif suivant l'une des revendications 1 à 5, caractérisé en ce que le capteur de position linéaire (3) est transporté sur un propre rail disposé parallèlement au rail (1).

7. Dispositif suivant l'une des revendications 1 à 6, caractérisé en ce qu'un frein de blocage (53) est prévu avec des mâchoires (54, 55) agissant directement sur le rail (1) ou sur un rail disposé en parallèle, ce frein étant supporté par un axe (56) sur le chariot (4), et les mâchoires (54, 55) pouvant être commandées (fig. 8, 9) par un électro-aimant frein ou un vérin (57) pour le freinage.

8. Dispositif suivant l'une des revendications 1 à 7, caractérisé en ce que les pièces (7) sont superposées dans le magasin (40), en ce que la pièce (7) située sur le dessus est saisie et introduite dans le dispositif par le dispositif de transport (5), et en ce que le magasin (40) possède au moins une chambre de réception (43), dans laquelle les pièces (7) sont superposées et, après enlèvement de la pièce (7) située sur le dessus, les pièces (7) situées au dessous sont soulevées par un dispositif de levage (46), les pièces (7) d'un profil différent étant logées le cas échéant dans des chambres de réception (43) juxtaposées.

9. Dispositif suivant l'une des revendications 1 à 8, caractérisé en ce qu'un autre dispositif de serrage (24) est prévu pour la pièce (7), ce dispositif comprenant un support (88) réglé à une hauteur du plan d'appui prédéterminée, un excentrique (89), un bras de serrage (90) relié à l'excentrique (89), un vérin (91) de commande du bras de serrage (90), ainsi qu'un ressort (92) sollicitant le support (88), ce support (88) étant monté oscillant et déplaçable par l'excentrique (89) à la hauteur prédéterminée, et présentant (fig. 22) un logement (140) pour un prolongement du crochet de serrage (28) du dispositif de transport (5).

10. Dispositif suivant l'une des revendications 1 à 9, caractérisé en ce que l'une des mâchoires (27, 28) du dispositif de serrage fixe (67) ou du dispositif de transport (5), pour la configuration d'une position de sortie latérale définie ou d'une butée latérale définie pour la pièce (7), occupe toujours à l'état fermé la même position perpendiculaire à la voie de déplacement, la deuxième mâchoire de serrage (25, 27), qui s'arrête dans la capacité de serrage en fonction de l'épaisseur de la matière de la pièce (7), étant montée sur un pivot (95), son extrémité étant déplaçable contre l'effet d'un ressort (96), en position de fermeture, par un excentrique (97) qui supporte la première mâchoire (26, 28), et étant déplaçable (fig. 23) par un vérin (99).

11. Dispositif suivant l'une des revendications 1 à 10, caractérisé en ce que les mâchoires de serrage à déplacement parallèle (25, 26 ; 27, 28) du dispositif de serrage (67) et du dispositif de transport (5) sont montées de façon à pouvoir coulisser sur une glissière (100) et sont déplaçables l'une par rapport à l'autre avec un vérin (101), un ressort (102) exerçant contre les mâchoires de serrage une pression sur un verrou (103) monté sur un axe (104), ce verrou (103) présentant une surface de butée (105) et un évidement (106), chacune des mâchoires de serrage (25, 27) venant en butée, au moment de la fermeture, contre la surface (105), et venant s'enclencher dans un évidement (106), et une surface d'arrêt inclinée (107) étant prévue pour l'ouverture des mâchoires, surface pouvant être sollicitée par les mâchoires (26, 28), ce qui fait que le verrou (103) bascule, ce qui libère l'autre mâchoire de serrage (25, 27) (fig. 24).

12. Dispositif suivant l'une des revendications 9 à 11, caractérisé en ce que le magasin (40) est soutenu par des rouleaux (41) et des rails (42) et est déplaçable par un moteur (45, 109) ou un vérin (110) perpendiculairement à la voie de déplacement.

13. Dispositif suivant l'une des revendications 1 à 12, caractérisé en ce qu'une butée (113) ou une face de référence (114) est prévue à une position fixe, au début de la voie de déplacement, pour définir un point de référence pour la mesure du déplacement.

14. Dispositif suivant l'une des revendications 9 à 13, caractérisé en ce que le magasin (40) comprend un dispositif de levage (115), par exemple un transporteur à chaîne, avec lequel les pièces (7) superposées peuvent être soulevées jusqu'à la hauteur du plan d'appui (116), les pièces superposées (7) pouvant être soulevées par couches dans le cas d'une pile de pièces de mêmes profils, et le reste de la pile étant en même temps retenu par un serre-flan (117), le dispositif de levage pouvant revenir à sa position de départ après l'usinage des pièces superposées et le reste de la pile pouvant être relevé par un dispositif de levage (118) sur une hauteur correspondant à peu près à l'épaisseur d'un profilé.

15. Dispositif suivant l'une des revendications 1 à 14, caractérisé en ce que la station de sciage (11) présente une lame de scie (69) déplaçable transversalement ou suivant un angle, de préférence de 45°, par rapport à la ligne d'usinage, cette lame de scie étant portée par un moteur de commande à une certaine distance d'un axe de pivotement (70) et pouvant osciller sur 130° autour de l'axe de pivotement (70) pour l'exécution de deux coupes situées à une certaine distance l'une de l'autre (fig. 13, 14).

16. Dispositif suivant l'une des revendications 1 à 15, caractérisé en ce que le magasin (40) et le dispositif équipé de moyens de commande sont déplaçables ou réglables pour l'alignement d'une pièce (7) contenue dans le magasin sur la voie de déplacement.

17. Méthode d'usinage de pièces longues avec un dispositif suivant l'une des revendications 1 à 16, caractérisé en ce que, une fois que la pièce a été saisie, de préférence à partir de l'un des dépôts disposés en amont du dispositif, une coupe en bout est exécutée, de préférence à angle droit ou à un angle de 45° par rapport à la voie de déplacement, coupe en bout qui est prise comme position de départ définie pour la mesure du déplacement ou le transport ultérieur à travers le dispositif, et caractérisé en ce que la pièce est maintenue serrée entre les mâchoires du dispositif de transport et/ou du (ou des) dispositif(s) de serrage pendant toute la durée de déplacement et d'usinage, les mâchoires du dispositif de transport qui serrent la pièce lors du transport de la pièce passant par les mâchoires ouvertes du (ou des) dispositif(s) de serrage fixe(s), et les mâchoires du (ou des) dispositif(s) de serrage qui serrent une pièce, situées entre les mâchoires ouvertes du dispositif de transport, étant traversées par celles-ci, et caractérisé en ce que la pièce est déposée à une position prédéterminée par ordinateur en vue de son transfert ultérieur.

Fig. 3

Fig. 2

Fig. 1

Fig. 6

Fig. 5

Fig. 4

Fig. 7

Fig. 8

Fig. 9

Fig. 12

Fig. 11

Fig. 10

Fig. *14*

Fig. *13*

Fig. *18*

Fig. 19

Fig. *20*

Fig. 21

39  10

5

7

65

26
28
32
33
7

5

82
80
83
67
11
81
70

84

5

24

6

84

86

85

EP 0 391 945 B1

Fig. *15*

Fig. *16*

Fig. *17*

114

94

68

72  73

114

66

93

Fig.24

Fig.23

Fig.22

Fig. 26

Fig. 27

116

116

40
41
42
41

19

Fig. 25

111

114

111

119

114

111

120

115

110

43

117

116

118

112

109

111

EP 0 391 945 B1

22

Fig. 30

Fig. 29

Fig. 28